# EUROPÄISCHE PATENTSCHRIFT

(11) **EP 0 256 534 B1**
(45) Veröffentlichungstag und Bekanntmachung des Hinweises auf die Patenterteilung: **24.03.1993**
(21) Anmeldenummer: 87111787.5
(22) Anmeldetag: 14.08.1987
(51) Int. Cl.: B01D 27/08

(54) **Filterpatrone mit verbesserter Strömungsführung**
Cartridge filter with flow-conducting elements
Cartouche filtrante avec des éléments de guidage du courant

(30) Priorität: 19.08.1986 DE 3628029
(43) Veröffentlichungstag der Anmeldung: 24.02.1988
(73) Patentinhaber: Brita Wasser-Filter-Systeme GmbH, D-65232 Taunusstein-Neuhof (DE)
(72) Erfinder:
(74) Vertreter: Weber, Dieter, Dr.

(56) Entgegenhaltungen:
- DE-A- 3 409 828
- US-A- 4 552 657

## Beschreibung

Die Erfindung betrifft eine Filterpatrone für Flüssigkeitsfilter, insbesondere als Einsatz für Behälter zur Filterung von Wasser zur Erzeugung von Trinkwasser, bestehend aus einem im allgemeinen zylindrischen Becher, welcher Filtermaterial enthält, und mit einem auf diesen Becher deckelartig aufgesetzten Verschlußsieb.

Eine derartige Filterpatrone ist aus der DE-A-34 09 828 bekannt. Dabei ist der Boden des Bechers ebenfalls als Sieb ausgebildet, so daß das zu reinigende Wasser durch das Verschlußsieb am oberen Ende des Bechers eintritt, durch das Filtermaterial im Innern des Bechers hindurchfließt und aus den unteren Sieböffnungen des Bechers als gereinigtes (gefiltertes) Trinkwasser ausfließt.

Bei der bekannten Filterpatrone sind im Inneren des Bechers weitere, teilweise geschlossene zylindrische Behälter derart angeordnet, daß das zu filternde Wasser, welches von oben in die Filterpatrone einfließt nacheinander auf- und absteigend mehrere ineinander geschachtelte Zylindermäntel durchfließen muß, bevor es aus einem zentralen Zylinder nach unten durch den Siebboden des Bechers abfließen kann. In den Hohlräumen, welche zwischen den ineinander geschachtelten Zylindern vorhanden sind, befindet sich das Filtermaterial, durch welches aufgrund der Ineinanderschachtelung der Zylinder das zu reinigende Wasser auf einem relativ langen Weg fließen muß, bevor es am Boden des Bechers austreten kann.

Andere Filterpatronen weisen derartige Elemente zur Führung des zu filternden Wassers nicht auf. Diese Patronen haben jedoch den Nachteil, daß von oben auf das Verschlußsieb in einem kräftigen Strahl fließendes Wasser (beispielsweise aus einer Wasserleitung) die Filterpatrone nicht auf ihrem ganzen Querschnitt durchfließt, sondern sich einen Kanal durch das Filtermaterial bahnt, so daß das Wasser entlang dieses Kanals sehr schnell durch die Filterpatrone und das Filtermaterial hindurchtritt und das Wasser auch nach der Filterung unter Umständen noch nicht die erforderliche Trinkwasserqualität aufweist.

Außerdem können sich bei derartigen Filterpatronen auch ohne die Einwirkung eines kräftigen Wasserstrahles allein aufgrund der Form des Verschlußsiebes bestimmte bevorzugte Strömungskanäle ausbilden, entlang derer das Wasser geführt wird, so daß auch in diesen Fällen eine unzureichende Filterung des Wassers zu befürchten ist. Dies gilt insbesondere dann, wenn die Filterpatrone schon längere Zeit in Gebrauch ist und das Filtermaterial im Bereich der Strömungskanäle nicht mehr die erforderliche Adsorptionsfähigkeit für auszufilternde Stoffe hat. Selbst wenn das Filtermaterial insgesamt noch nicht erschöpft ist, kann also die Qualität des gefilterten Wassers bereits unzureichend sein, obwohl der Verbraucher die beispielsweise vom Hersteller angegebene maximal zu filternde Wassermenge noch nicht gefiltert hat.

Die bekannte, eingangs erwähnte Filterpatrone weist zwar die letztgenannten Nachteile nicht auf, da durch die Ineinanderschachtelung mehrerer Zylinder das zu filternde Wasser das Filtermaterial praktisch vollständig durchsetzt und auf diese Weise auch optimal genutzt wird, allerdings ergeben sich aufgrund der Bauweise dieser Filterpatrone dennoch einige mögliche Nachteile bei der Herstellung und auch beim Gebrauch derselben.

Die Herstellung einer derartigen Filterpatrone ist zum einen aufwendig, da sowohl Deckel als auch Boden jeweils einen oder mehrere zylindrische Aufbauten aufweisen müssen. Zum anderen ist auch das Befüllen einer derartigen Patrone mit Filtermaterial teils schwierig und aufwendig. Weiterhin ergibt sich für den Verbraucher der Nachteil, daß aufgrund des langen und engen Strömungsweges für das zu filternde Wasser die Durchlaufzeiten ziemlich groß werden. Die Filterpatrone hat also nur einen langsamen Flüssigkeitsdurchsatz.

Der Erfindung liegt daher die Aufgabe zugrunde, die Funktion einer Filterpatrone mit den eingangs genannten Merkmalen zu verbessern und insbesondere eine solche Filterpatrone zu schaffen welche bei vergleichsweise schnellem Flüssigkeitsdurchsatz eine gute Filterwirkung zeigt und das Filtermaterial optimal ausnutzt.

Diese Aufgabe wird dadurch gelöst, daß das Verschlußsieb durch eine nach oben im wesentlichen geschlossene und seitlich offene Verteilerkappe abgedeckt ist, die an ihrer Unterseite Drallschaufeln aufweist, wobei die Unterseite der Verteilerkappe zur Oberseite des Verschlußsiebes einen Abstand hat, so daß durch die Drallschaufeln unterteilte Zwischenräume zwischen Verteilerkappe und Sieben gebildet werden, und daß in der Verteilerkappe Entlüftungsöffnungen bzw. Schlitze vorgesehen sind.

Eine derartige Verteilerkappe verhindert, daß beispielsweise ein Wasserstrahl direkt durch das Verschlußsieb auf das Filtermaterial gerichtet werden kann. Auf diese Weise wird die Bildung von entsprechenden Strömungskanälen vermieden und das Wasser verteilt sich mit Hilfe der Drallschaufeln gleichmäßig über das Filtermaterial.

Dabei erweist es sich als zweckmäßig, wenn die Drallschaufeln an der Unterseite der Verteilerkappe die Form von gekrümmten Platten haben, welche gleichzeitig radial und in Umfangsrichtung verlaufen.

Derartige Drallschaufeln geben dem seitlich unter die Verteilerkappe fließenden und von oben in das Verschlußsieb eindringenden Wasser eine Strömungsrichtung in Umfangsrichtung, so daß das Wasser nicht direkt auf dem kürzesten Wege vertikal durch das Filtermaterial hindurchtritt, sondern nach Art eines Wirbels auf der Oberfläche des Verschlußsiebes herumgeführt wird, und dieses auf seinem ganzen Querschnitt gleichmäßig durchsetzt, so daß die Bildung von Strömungskanälen hierdurch weitgehend ausgeschlossen wird.

In der bevorzugten Ausführungsform der Erfindung ist weiterhin vorgesehen, daß das Verschlußsieb durch an seiner Unterseite im wesentlichen radial verlaufende Trennstege in Sektoren aufgeteilt ist.

Durch diese Maßnahme wird vermieden, daß das durch das Verschlußsieb eintretende Wasser sich an irgend einem Punkt an der Unterseite des Verschlußsiebes bevorzugt sammelt und von diesem Punkt nach unten in das Filtermaterial abfließt, wodurch wiederum ein nicht gewünschter Strömungskanal entstehen könnte. Da das Verschlußsieb an seiner Unterseite durch Trennstege in Sektoren aufgeteilt ist, muß das in einem Sektorbereich durch das Verschlußsieb eintretende Wasser in diesem Sektor bleiben, so daß der eben geschilderte Effekt des in einem Punkt an der Unterseite des Verschlußsiebes zusammenfließenden Wassers nicht auftreten kann. Die Kombination mit den vorgenannten Drallschaufeln an der Unterseite der Verteilerkappe bewirkt, daß das eintretende Wasser auf alle Sektoren gleichmäßig verteilt wird. Damit die gewünschten Wirkungen erzielt werden, sollte die Zahl der Sektoren mindestens vier betragen, in der bevorzugten Ausführungsform sind acht Sektoren vorgesehen. Wegen eines deutlich höheren Materialverbrauches für die Trennstege und auch wegen der entsprechenden Verkleinerung der effektiven Sieboberfläche erscheint eine weitere, wesentliche Erhöhung der Sektorenzahl nicht sinnvoll.

Bei der bevorzugten Ausführungsform der Erfindung haben die Trennstege die Form von radial ausgerichteten Platten, welche sich mit Ausnahme eines kleinen zentralen Bereiches über den gesamten Innenradius der Filterpatrone erstrecken und bis zu einer Tiefe, welche maximal dem Radius der Filterpatrone entspricht, in diese hineinreichen. Da der Becher der Filterpatrone weitgehend mit Filtermaterial gefüllt ist, ragen derartig gestaltete Trennstege bis in das Filtermaterial hinein, so daß auch das Filtermaterial sektorweise gleichmäßig mit zu filterndem Wasser versorgt wird.

Die Kombination von radial und in Umfangsrichtung verlaufenden Drallschaufeln der Verteilerkappe und von radial verlaufenden Trennstegen des Verschlußsiebes bewirkt, daß zwischen je zwei Drallschaufeln Wasser zu mindestens zwei Sektoren gleichzeitig geführt wird, wenn die Zahl der Drallschaufeln nicht größer ist als die Zahl der Trennstege. Auch diese Maßnahme trägt zur gleichmäßigen Versorgung der Sektoren mit Wasser bei.

Bei vorteilhafter weiterer Ausgestaltung der Erfindung weist die Verteilerkappe an ihrer Unterseite mindestens einen Zapfen auf, welcher in eine entsprechende Öffnung auf der Oberseite des Verschlußsiebes einsetzbar ist. Ein derartiger Zapfen und die entsprechende Öffnung stellen eine sichere Verbindung zwischen Verteilerkappe und Verschlußsieb her.

Bevorzugt wird dabei eine Ausführungsform der Erfindung, bei welcher in axialer Verlängerung jeder der Drallschaufeln Zapfen ausgebildet sind, welcher jeweils in Öffnungen in jedem der Trennstege einsetzbar sind.

Die Trennstege weisen dabei genügend Material auf, um gegebenenfalls Öffnungen mit genügend festem Rand bilden zu können und die Ausbildung der Zapfen als axiale Verlängerungen der Drallschaufeln erweist sich als materialsparend. Mehrere, gleichzeitig in Öffnungen eingesetzte Zapfen sorgen für eine sichere Verbindung zwischen Verschlußsieb und Verteilerkappe und verhindern auch eine Verdrehung dieser beiden Teile gegeneinander.

Zusätzlich erweist es sich als zweckmäßig, wenn die Verteilerkappe ebenso wie das Verschlußsieb kegelförmig ist und einen zentralen nach oben gerichteten Hohlzapfen aufweist, dessen Länge mindestens dem Radius der Filterpatrone entspricht, und der auf einen im allgemeinen kürzeren zentralen Hohlzapfen des Verschlußsiebes mit Passung aufsetzbar ist.

Eine derartige Verbindung zwischen Verteilerkappe und Verschlußsieb kann die vorgenannten Zapfen bzw. Öffnungen ersetzen, kann jedoch auch in Ergänzung zu diesen vorgesehen sein. Die Länge des Hohlzapfens der Verteilerkappe ermöglicht es, diesen als Griff für die Kappe und - je nach Stärke der Verbindung zwischen Verteilerkappe und Verschlußsieb - auch als Griff für die ganze Patrone zu benutzen.

Als zweckmäßig erweist es sich auch, wenn die Verteilerkappe und das Verschlußsieb je mindestens einen Entlüftungskanal aufweisen, welche bei auf das Verschlußsieb aufgesetzter Verteilerkappe miteinander in Verbindung stehen. Beim Befüllen des Filterbehälters kann so die im oberen Bereich der Filterpatrone bzw. der Verteilerkappe befindliche Luft entweichen.

In der bevorzugten Ausführungsform der Erfindung ist dabei vorgesehen, daß die Entlüftungskanäle in den jeweiligen Hohlzapfen des Verschlußsiebes und der Verteilerkappe angeordnet sind.

Diese Ausführungsform der Entlüftungskanäle ist konstruktiv einfach und gleichzeitig bei der kegelförmigen Ausgestaltung des Verschlußsiebes und der Verteilerkappe auch sehr wirkungsvoll.

Weitere Vorteile, Merkmale und Anwendungsmöglichkeiten der vorliegenden Erfindung werden deutlich anhand der folgenden Beschreibung bevorzugter Ausführungsformen und der dazugehörigen Zeichnungen. Es zeigen:
- Figur 1: die Seitenansicht einer Verteilerkappe,
- Figur 2: eine Ansicht auf die Verteilerkappe von oben,
- Figur 3: einen Schnitt durch die Verteilerkappe entlang der Linie E-F in Figur 2,
- Figur 4: eine weitere Ausführungsform der Verteilerkappe in einer Seitenansicht,
- Figur 5: eine Draufsicht auf die Verteilerkappe aus Figur 4,
- Figur 6: einen Schnitt entlang der Linie C-D in Figur 5,
- Figur 7: die Draufsicht auf ein Verschlußsieb für eine Verteilerkappe nach den Figuren 4 bis 6,
- Figur 8: einen Schnitt entlang der Linie A-B in Figur 7 und
- Figur 9: eine Seitenansicht des Verschlußsiebes nach Figur 7.

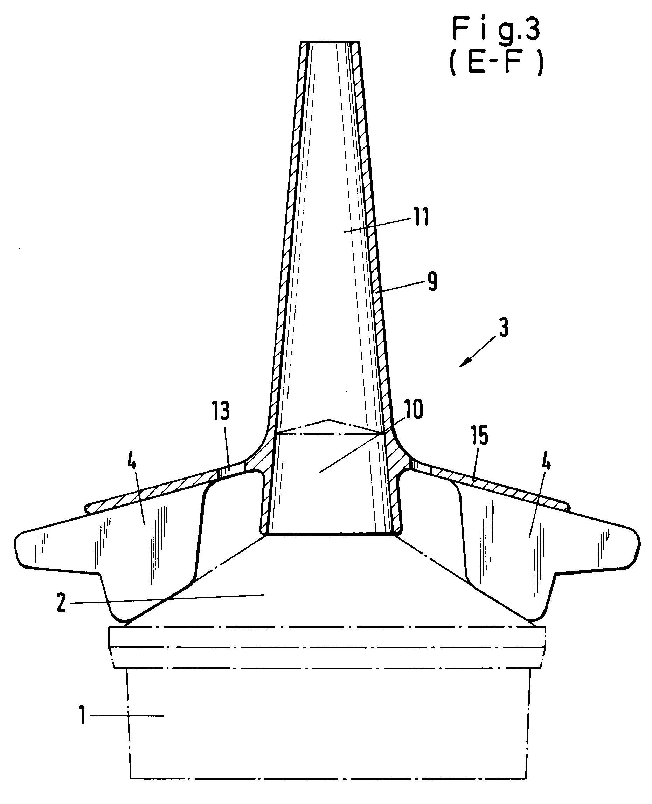

Die in Figur 3 dargestellte Verteilerkappe besteht im wesentlichen aus dem schirmartigen unteren Teil 15, den darunter angeordneten Drallschaufeln 4 sowie dem als Griff und Entlüftung dienenden Hohlzapfen 9. Außerdem sind am Übergang vom unteren Teil 15 zum Hohlzapfen 9 Entlüftungsschlitze 13 sichtbar.

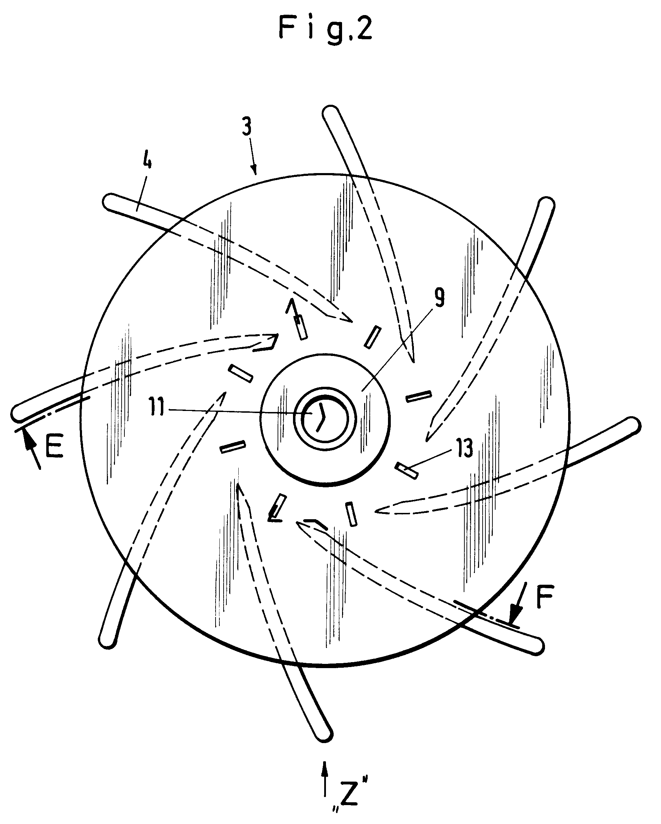

In der Figur 2 ist auch der zentrale Entlüftungskanal 11 des Hohlzapfens 9 zu erkennen. Die Drallschaufeln 4, die teilweise gestrichelt gezeichnet sind, sind als gekrümmte Platten zu erkennen, welche sowohl in radialer als auch in Umfangsrichtung der Verteilerkappe 3 verlaufen.

Der Schnitt entlang der Linie E-F in Figur 2 ist in Figur 3 dargestellt und läßt erkennen, daß die außerhalb des Hohlzapfens 9 liegenden Entlüftungsöffnungen 13 die unter dem schirmartigen Unterteil 15 befindliche Luft entweichen lassen soll, wenn seitlich entlang der Drallschaufeln Wasser unter die Verteilerkappe 3 eindringt, um durch die Öffnungen des Verschlußsiebes 2 in die Filterpatrone zu gelangen. Das Verschlußsieb 2 mit seinem Hohlzapfen 10 und der darunter angeordnete Becher 1 sind durch strichpunktierte Linien angedeutet.

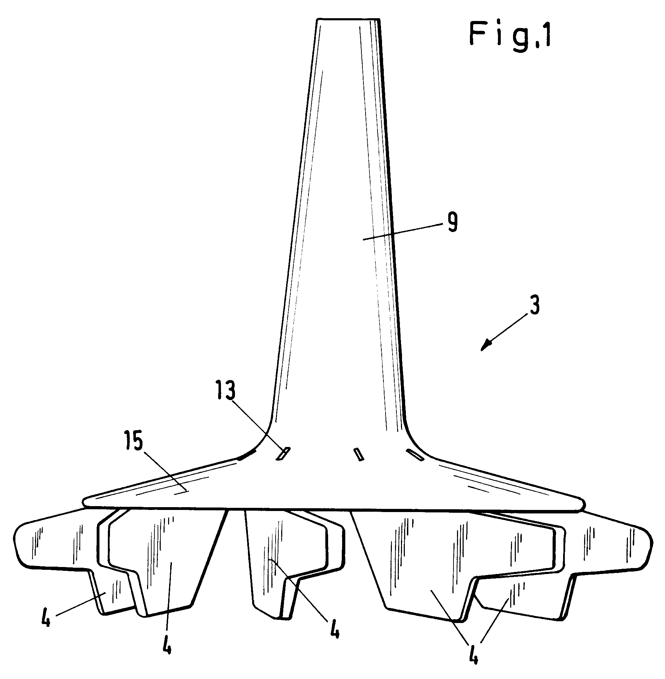

Aus den Figuren 1 bis 3 wird deutlich, daß ein von oben kommender Wasserstrahl nicht direkt auf das Verschlußsieb 2 und das darunterliegende Filtermaterial treffen kann, wodurch sich ansonsten in dem Filtermaterial Strömungskanäle bilden würden. Die Entlüftungsschlitze 13 sind zu klein als daß sie in nennenswertem Umfange Wasser hindurchfließen ließen. Das auf das schirmartige Unterteil 15 auftreffende Wasser fließt seitlich herunter und dringt dann in die Zwischenräume zwischen den Drallschaufeln 4 unter die Verteilerkappe 3 und gelangt so zu den Sieböffnungen des Verschlußsiebes 2. Durch die Form und Ausrichtung der Drallschaufeln, welche mit ihrer Unterkante auf der Oberfläche des Verschlußsiebes 2 aufliegen, wird das eindringende Wasser in einer Art Wirbel um den unteren Teil des Hohlzapfens 9 herumgeführt und dringt dort sowie auf der Oberfläche zwischen den Drallschaufeln 4 allmählich durch die Öffnungen des Verschlußsiebes 2 hindurch. Sowohl das Verschlußsieb 2 als auch das Unterteil 15 der Verteilerkappe 3 haben im wesentlichen einen kegelförmigen Querschnitt. Dabei ist in der Mitte des Verschlußsiebes 2 noch ein Hohlzapfen 10 ausgebildet, welcher mit Passung in den unteren Bereich des Entlüftungskanales 11 des Hohlzapfens 9 einsetzbar ist.

Der Entlüftungskanal 11 dient für die Entlüftung des Verschlußsiebes 2 und des Hohlzapfens 10, soweit diese nicht über die Entlüftungsschlitze 13 erfolgen kann.

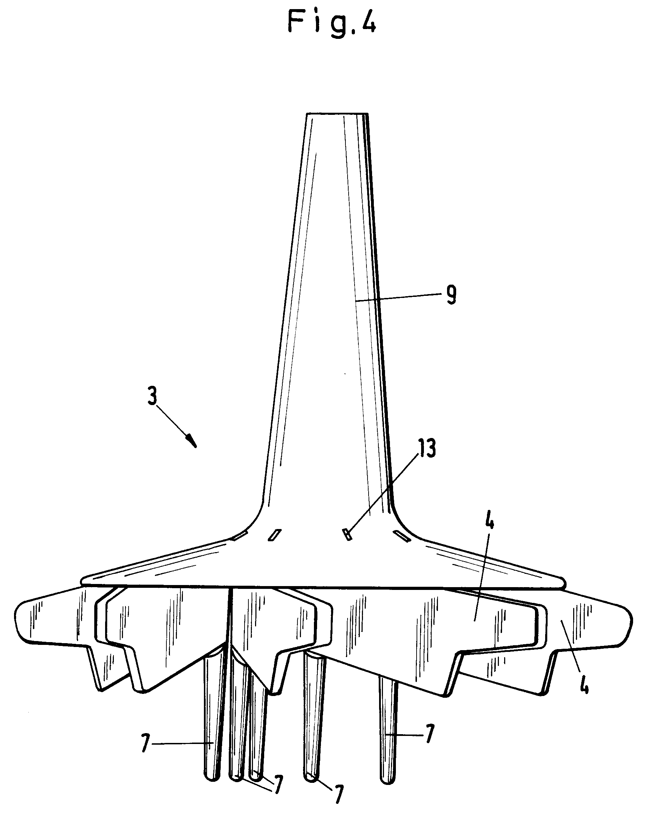

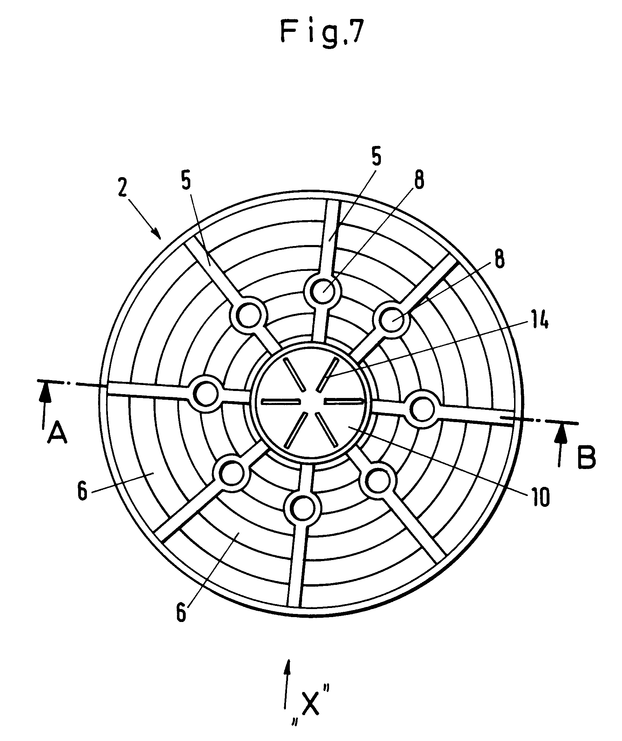

Eine weitere Ausführungsform einer Verteilerkappe 3 stellen die Figuren 4 bis 6 dar. Diese Ausführungsform ist weitgehend mit der eben beschriebenen Ausführungsform identisch, jedoch weisen die Drallschaufeln in axialer Verlängerung zusätzlich Zapfen 7 auf, welche in passende Öffnungen 8 des Verschlußsiebes 2 einsetzbar sind, wie diese in den Figuren 7 bis 9 dargestellt sind.

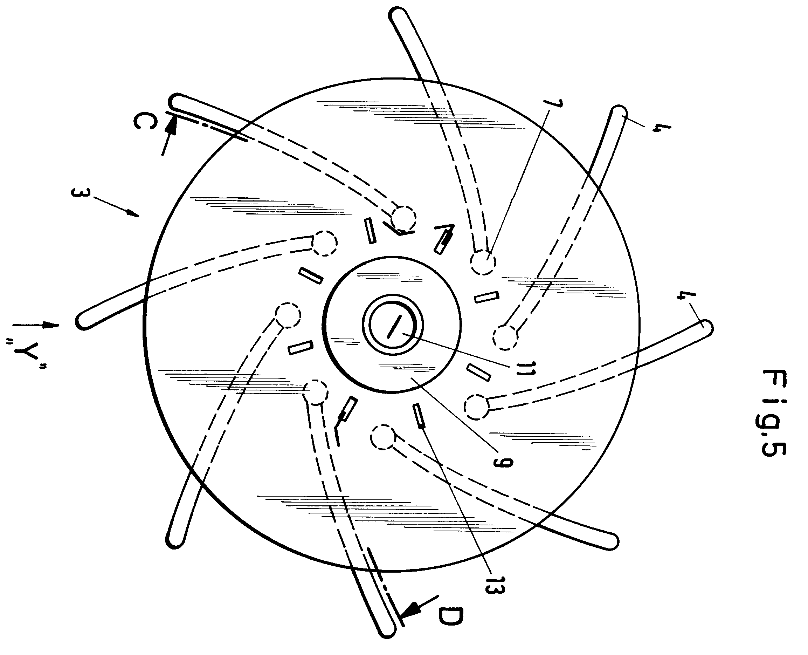

Die Zapfen 7 sind an den in radialer Richtung am weitesten innen liegenden Enden der Drallschaufeln 4 angeordnet, wie in Figur 5 zu erkennen ist.

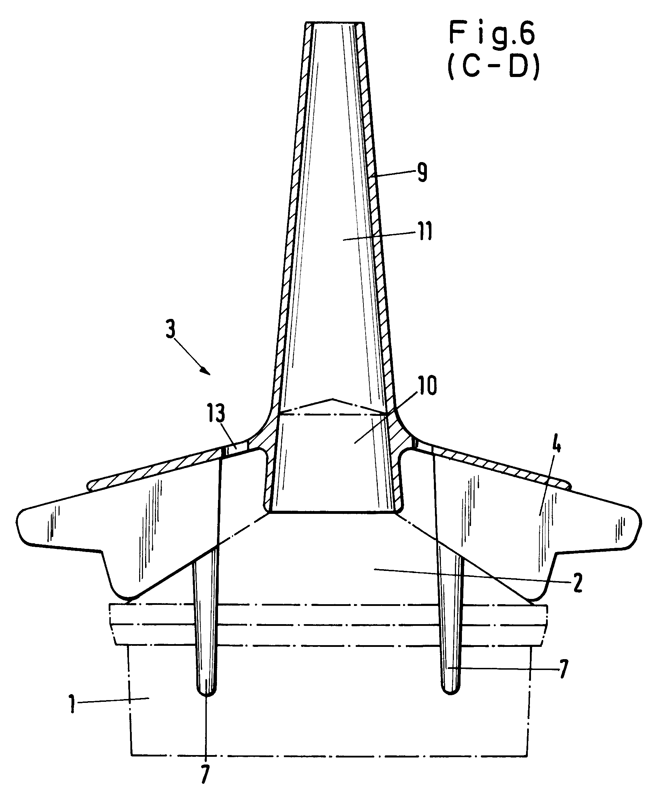

In der Querschnittdarstellung der Figur 6 sieht man, wie die Verteilerkappe 3 und das Verschlußsieb 2 zusammengesetzt sind. Das Verschlußsieb 2 mit dem Hohlzapfen 10 sowie der Becher 1 sind in dieser Darstellung wiederum durch strichpunktierte Linien angedeutet.

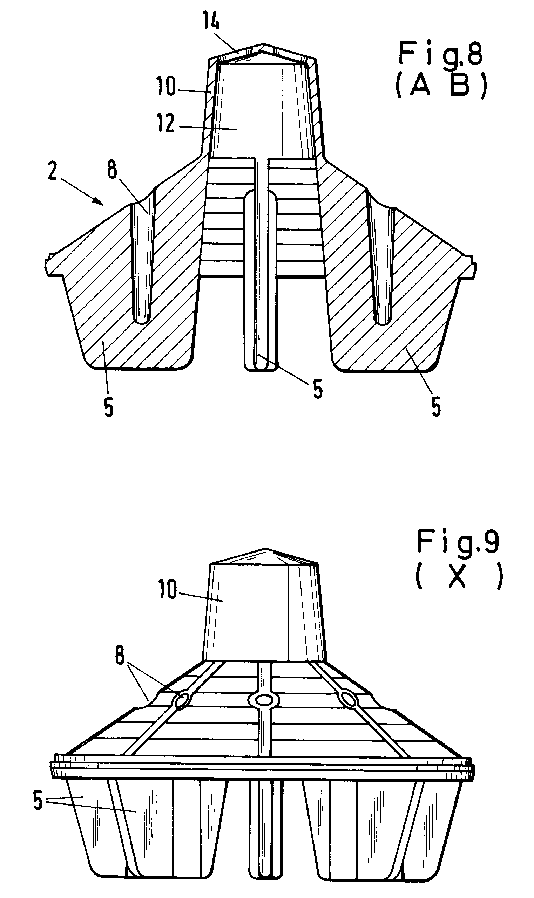

In der Draufsicht der Figur 7 sind deutlich die Öffnungen 8 sichtbar, in welche die Zapfen 7 der Verteilerkappe 3 eingesteckt werden. Das Verschlußsieb 2 ist durch Trennstege 5 in acht Sektoren 6 eingeteilt. Um die Öffnungen 8 in den Trennstegen 5 bilden zu können, sind diese im Bereich der Öffnungen 8 entsprechend erweitert. Wie in den Figuren 9 und auch in der Querschnittdarstellung der Figur 8 zu erkennen ist, bestehen die Trennstege 5 im wesentlichen aus radial angeordneten Platten, welche sich abgesehen von einem kleinen zentralen Bereich in radialer Richtung fast über den gesamten Innenradius des Bechers 1 erstrecken. Dabei reichen die Trennstege 5 bis in das im Becher 1 befindliche Filtermaterial hinein. Der kurze Hohlzapfen 10 des Verschlußsiebes 2 weist Entlüftungsschlitze 14 auf, durch welche die in dem Hohlraum 12 und darunter befindliche Luft in den Entlüftungskanal 11 des Hohlzapfens 9 der Verteilerkappe entweichen kann, wenn der Filterbehälter, in welchen die Filterpatrone eingesetzt ist, mit Wasser gefüllt wird. Die Entlüftungsschlitze 14 sind bewußt klein gehalten um zu vermeiden, daß durch den Entlüftungskanal 11 des oben offenen Hohlzapfens 9 ein Wasserstrahl direkt auf das Filtermaterial treffen kann.

In Verbindung mit den unmittelbar auf der Sieboberfläche angeordneten Drallschaufeln 4 bewirkt die Einteilung des Verschlußsiebes 2 in Sektoren 6, daß das in den Filterbehälter eingefüllt Wasser sich sehr gleichmäßig über die Oberfläche des Verschlußsiebes 2 verteilt und das Filtermaterial auf dem ganzen Querschnitt der Filterpatrone sehr gleichmäßig durchsetzt. Das schirmartige Unterteil 15 der Verteilerkappe 3 verhindert, daß ein Wasserstrahl direkt auf die Sieböffnungen und das darunterliegende Filtermaterial auftreffen und dort Strömungskanäle bilden kann, deren Adsorptionsfähigkeit für aus dem Wasser herauszufilternde Stoffe sehr schnell erschöpft wäre. Weiterhin kann auch Wasser, welches durch die Sieböffnungen des Verschlußsiebes 2 eindringt, nicht an der Unterseite des Siebes zu einem Punkt zusammen- und von dort nach unten ablaufen, da dies durch die Trennstege 5, welche bis in das Filtermaterial hineinreichen, verhindert wird.

Da das Wasser oder auch eine andere zu filternde Flüssigkeit praktisch auf dem gesamten inneren Querschnitt des Bechers 1 durch das Filtermaterial hindurchfließt, ist die Menge des pro Zeiteinheit durchfließenden Wassers trotz einer niedrigen Strömungsgeschwindigkeit relativ groß. Die niedrige Strömungsgeschwindigkeit garantiert gleichzeitig eine gute Filterwirkung, da das Filtermaterial entsprechend lange auf das Wasser einwirken kann. Darüberhinaus wird das Filtermaterial optimal ausgenutzt, da während des Gebrauchs des Filters das Wasser immer gleichmäßig über den Querschnitt des Bechers 1 verteilt wird, so daß nicht etwa einzelne Bereiche oder Strömungskanäle in ihrer Filterwirkung schon vorzeitig erschöpft sind. Das Filtermaterial bzw. die Filterpatrone brauchen daher erst dann ausgetauscht zu werden, wenn die Kapazität des Filtermaterials vollständig ausgenutzt ist, ohne daß schon wesentlich früher eine mangelnde Qualität des gefilterten Wassers bzw. der gefilterten Flüssigkeit zu befürchten wäre.

## Patentansprüche

1. Filterpatrone für Flüssigkeitsfilter, insbesondere als Einsatz für Behälter zur Filterung von Wasser zur Erzeugung von Trinkwasser, bestehend aus einem im allgemeinen zylindrischen Becher (1), welcher Filtermaterial enthält, und einem auf diesen Becher (1) deckelartig aufgesetzten Verschlußsieb (2), **dadurch gekennzeichnet**, daß das Verschlußsieb (2) durch eine nach oben im wesentlichen geschlossene und seitlich offene Verteilerkappe (3) abgedeckt ist, welche an ihrer Unterseite Drallschaufeln (4) aufweist, wobei die Unterseite der Verteilerkappe (3) zur Oberseite des Verschlußsiebes (2) einen Abstand hat, so daß durch die Drallschaufeln unterteilte Zwischenräume zwischen Verteilerkappe und Sieben gebildet werden, und daß in der Verteilerkappe Entlüftungsöffnungen bzw. Schlitze (13) vorgesehen sind.

2. Filterpatrone nach Anspruch 1, **dadurch gekennzeichnet**, daß die Drallschaufeln (4) die Form von gekrümmten Platten haben, welche gleichzeitig radial und in Umfangsrichtung verlaufen.

3. Filterpatrone nach Anspruch 1 oder 2, **dadurch gekennzeichnet**, daß das Verschlußsieb (2) durch an seiner Unterseite im wesentlichen radial verlaufende Trennstege (5) in Sektoren (6) aufgeteilt ist.

4. Filterpatrone nach Anspruch 3, **dadurch gekennzeichnet**, daß die Trennstege (5) des Verschlußsiebes (2) die Form von radial ausgerichteten Platten haben, welche sich mit Ausnahme eines kleinen, zentralen Bereiches über den gesamten Innenradius der Filterpatrone erstrecken und bis zu einer Tiefe, welche maximal dem Radius der Filterpatrone entspricht, in diese hineinreichen.

5. Filterpatrone nach einem der Ansprüche 1 bis 4, **dadurch gekennzeichnet**, daß die Verteilerkappe (3) an ihrer Unterseite mindestens einen Zapfen (7) aufweist, welcher in eine entsprechende Öffnung (8) auf der Oberseite des Verschlußsiebes (2) einsetzbar ist.

6. Filterpatrone nach den Ansprüchen 2 bis 5, dadurch gekennzeichnet, daß in axialer Verlängerung jeder der Drallschaufeln (4) Zapfen (7) ausgebildet sind, welche jeweils in Öffnungen (8) in jedem der Trennstege (5) einsetzbar sind.

7. Filterpatrone nach einem der Ansprüche 1 bis 6, dadurch gekennzeichnet, daß die Verteilerkappe (3) kegelförmig ist und einen zentralen, nach oben gerichteten Hohlzapfen (9) aufweist, dessen Länge mindestens dem Radius der Filterpatrone entspricht und der auf einen kürzeren zentralen Hohlzapfen (10) des Verschlußsiebes (2) mit Passung aufsetzbar ist.

8. Filterpatrone nach einem der Ansprüche 1 bis 7, dadurch gekennzeichnet, daß die Verteilerkappe (3) und das Verschlußsieb (2) je mindestens einen Entlüftungskanal (11, 12) aufweisen, welche bei auf das Verschlußsieb (2) aufgesetzter Verteilerkappe (3) miteinander in Verbindung stehen.

9. Filterpatrone nach Anspruch 8, dadurch gekennzeichnet, daß die Entlüftungskanäle (11, 12) in den jeweiligen Hohlzapfen (9, 10) angeordnet sind.

## Claims

1. A filter cartridge for liquids filters, particularly as an insert for containers for filtering water to produce drinking water, consisting of a generally cylindrical cup (1) which contains filter material, and an occluding sieve (2) fitted onto this cup (1) like a lid, characterised in that the occluding sieve (2) is masked by a substantially upwardly closed and laterally open distributor cap (3) having on its under side swirling blades (4), the under side of the distributor cap (3) being at a distance from the top of the occluding sieve (2) so that, sub-divided by swirling blades, intermediate spaces are formed between the distributor cap and sieves and in that venting orifices or slots (13) are provided in the distributor cap.

2. A filter cartridge according to claim 1, characterised in that the swirling blades (4) take the form of curved plates which extend simultaneously radially and in the peripheral direction.

3. A filter cartridge according to claim 1 or 2, characterised in that the occluding sieve (2) is sub-divided into sectors (6) by separating webs (5) which extend substantially radially on its under side.

4. A filter cartridge according to claim 3, characterised in that the separating webs (5) of the occluding sieve (2) take the form of radially orientated plates which, with the exception of a small central area, extend over the entire inner radius of the filter cartridge into which they extend to a depth which corresponds to not more than the radius of the filter cartridge.

5. A filter cartridge according to one of claims 1 to 4, characterised in that the distributor cap (3) has on its under side at least one journal (7) which can be inserted into a corresponding aperture (8) on the top of the occluding sieve (2).

6. A filter cartridge according to claims 2 to 5, characterised in that in the axial extension of each of the swirling blades (4), journals (7) are constructed which can be inserted in each case into apertures (8) in each of the separating webs (5).

7. A filter cartridge according to one of claims 1 to 6, characterised in that the distributor cap (3) is conical and has a central upwardly directed hollow journal (9) the length of which corresponds at least to the radius of the filter cartridge and which can be placed and fit on a shorter central hollow journal (10) on the occluding sieve (2).

8. A filter cartridge according to one of claims 1 to 7, characterised in that the distributor cap (3) and the occluding sieve (2) each have at least one venting passage (11, 12) which communicate with each other when the distributor cap (3) is fitted onto the occluding sieve (2).

9. A filter cartridge according to claim 8, characterised in that the venting passages (11, 12) are disposed in the respective hollow journals (9, 10).

## Revendications

1. Cartouche filtrante pour filtres de liquides, utilisable en particulier comme insert pour des récipients de filtrage d'eau en vue de la génération d'eau potable, consistant en une coupelle généralement cylindrique (1) qui contient une matière filtrante et en un tamis de fermeture (2) disposé à la manière d'un couvercle sur cette coupelle (1), caractérisée en ce que le tamis de fermeture (2) est recouvert par une calotte de répartition (3), sensiblement fermée vers le haut et ouverte latéralement, qui présente sur sa face inférieure des ailettes directrices (4), la face inférieure de la calotte de répartition (3) étant située à distance du côte supérieur du tamis de fermeture (2) de sorte que des espaces intermédiaires séparés par les ailettes directrices sont formés entre la calotte de répartition et le tamis, et en ce que des ouvertures ou fentes (13) d'aération sont prévus dans la calotte de répartition.

2. Cartouche filtrante selon la revendication 1 , caractérisée en ce que la forme des ailettes directrices (4) est celle de plaques incurvées, dont le tracé est simultanément radial et en direction de la périphérie.

3. Cartouche filtrante selon la revendication 1 ou 2, caractérisée en ce que le tamis de fermeture (2) est divisé en secteurs (6) au moyen de nervures de séparation (5), situées sur son côté inférieur, de tracé sensiblement radial.

4. Cartouche filtrante selon la revendication 3, caractérisée en ce que les nervures de séparation (5) du tamis de fermeture (2) présentent la forme de plaques orientées radialement qui s'étendent, à l'exception d'une petite zone centrale, sur tout le rayon intérieur de la cartouche filtrante et qui pénètrent dans celle-ci jusqu'à une profondeur qui correspond au maximum au rayon de la cartouche de filtrante.

5. Cartouche filtrante selon l'une des revendications 1 à 4, caractérisée en ce que la calotte de répartition (3) comprend sur son côté inférieur au moins un doigt (7), qui peut être inséré dans une ouverture correspondante (8) de la face supérieure du tamis de fermeture (2).

6. Cartouche filtrante selon l'une des revendications 2 à 5, caractérisée en ce que des doigts (7), qui sont respectivement insérables dans des ouvertures (8) de chacune des nervures de séparation (5), sont formés dans un prolongement axial de chacune des ailettes directrices(4).

7. Cartouche filtrante selon l'une des revendications 1 à 6, caractérisée en ce que la calotte de répartition (3) est de forme conique et présente un doigt central creux (9) tourné vers le haut dont la longueur correspond au moins au rayon de la cartouche filtrante et qui peut être monté de manière ajustée sur un doigt creux central plus court (10) du tamis de fermeture (2).

8. Cartouche filtrante selon l'une des revendications 1 à 7, caractérisée en ce que la calotte de répartition (3) et le tamis de fermeture (2) comprennent chacun au moins un canal d'aération (11, 12) qui sont en liaison entre eux lorsque la calotte de répartiton (3) est montée sur le tamis de fermeture (2).

9. Cartouche filtrante selon la revendication 8, caractérisée en ce que les canaux d'aération (11, 12) sont disposés dans les doigts creux respectifs (9, 10).
